# EUROPÄISCHE PATENTSCHRIFT

(11) **EP 1 714 832 B1**
(45) Veröffentlichungstag und Bekanntmachung des Hinweises auf die Patenterteilung: **01.08.2007**
(21) Anmeldenummer: 06006233.8
(22) Anmeldetag: 27.03.2006
(51) Int. Cl.: B60R 9/04

(54) **Reling für Fahrzeuge**
Rail for vehicles
Rail pour véhicules

(30) Priorität: 18.04.2005 DE 102005017761
(43) Veröffentlichungstag der Anmeldung: 25.10.2006
(73) Patentinhaber: Advanced Accessory Systems GmbH, 69207 Sandhausen (DE)
(72) Erfinder: Runte, Michael, 69115 Heidelberg (DE)
(74) Vertreter: Weber, Walter

(56) Entgegenhaltungen:
- EP-A- 1 036 707
- EP-A- 1 136 324
- DE-C1- 4 441 802
- DE-U1- 8 136 800
- US-A- 5 715 981

## Beschreibung

Die Erfindung betrifft eine Reling für Fahrzeuge mit mindestens einem in einem Abstand und im wesentlichen parallel zu einer Karosseriefläche sich erstreckenden rohrförmigen Holm, der an den Holmenden mit jeweils einer Abbiegung ausgebildet ist und mindestens an diesen Holmenden Befestigungsmittel zur Befestigung an der Karosserie aufweist, wobei die Abbiegungen des Holms derart ausgebildet sind, daß sich die Holmenden mit ihren Öffnungen an die Karosserieoberfläche anlegen, und die Adapter derart ausgebildet sind, daß sie in die Öffnungen des Holmrohres an den Holmenden vollständig einfügbar sind, wobei Haltemittel die Adapter in dem Holm festlegen und die Befestigungsmittel den Adapter mit der Karosserie verbinden.

Eine derartige Reling für Fahrzeuge ist aus der DE 42 23 898 A1 bekannt. Als Befestigung des Adapters im Holm ist ein Verkleben, Verstiften, Verschrauben oder ein Umformen des Adapters vorgesehen. Verkleben ist zeitaufwendig, Umformen erfordert den Einsatz eines Spezialwerkzeuges und Verstiften oder Verschrauben erfordert eine in den Holm einzubringende Bohrung, was entweder das Befestigungsmittel von außen sichtbar macht oder es müßte im Holminneren eine Materialverdickung des Holms für einen Preßsitz eines Stifts oder ein Gewinde, jeweils im Holminneren angeordnet, vorhanden sein, was die Fertigung des Holmes nicht unerheblich verteuern würde.

Eine gattungsgemäße Reling der eingangs genannten Art ist auch aus der DE 44 41 802 C1 bekannt. Der dort vorgesehene Adapter, welcher die Befestigungsmittel für die Relingbefestigung hält, wird als aufgeschäumtes Material in das Holmende eingespritzt, expandiert dort, um nach der Aushärtung einen stoffschlüssigen Verbund mit dem Holm zu bilden. Alternativ wird ein solcher Adapter aus Gummi oder einem elastischen Kunststoffmaterial gebildet, der in das Holmende eingepreßt wird, um dort kraftschlüssig zu halten, wobei zusätzlich noch ein Kleber vorgesehen werden kann. Die erstgenannte Art der Anbringung des Adapters erfordert jedoch das Anrichten des expandierenden aufschäumenden Materials und die Einbringung unter Einlagerung der Befestigungsmittel. Dabei müssen letztere exakt positioniert und mit dem Material umspritzt werden. Danach muß die Aushärtung abgewartet werden. Dies erfordert einen hohen Aufwand an Arbeit und Zeit oder an Automatisierungsmitteln. Auch die zweite Alternative erfordert den Einsatz von Preßvorrichtungen oder von Kleber unter Abwartung der Aushärtzeit, wenn ein sicherer Halt des Adapters erzielt werden soll.

Adapter zur Befestigung von Hohlkörpern, insbesondere von Rohren, sind auch außerhalb des Bereichs der Herstellung von Relingen für Fahrzeuge bekannt:

Aus der DE 103 16 326 A1 ist eine Befestigungsvorrichtung für Beschlagteile bekannt, bei der eine Schraube eine Spreizhülse durchsetzt und einen Spreizkonus in eine konische Gegenfläche der Spreizhülse unter Aufspreizung derselben hineinzieht. Diese Vorrichtung ist vor allem für eine senkrechte Anbringung von rohrförmigen Bauteilen auf plattenförmigen Bauteilen geeignet. Eine derartige Befestigungsvorrichtung ist auf eine Reling für Kraftfahrzeuge in dieser Gestalt nicht übertragbar, da die Holmenden oft relativ spitzwinklig zur Karosserie verlaufen und eine Befestigungsvorrichtung wegen hoher Lasten und Kräfte weit in den unter dem relativ spitzen Winkel aufgesetzten Holm hineinragen muß. Dasselbe gilt für den Vorschlag der DE 94 10 897 U, da auch dort Spreizhülse, Spreizkonus und Schraube zusammenwirken.

Der Vorschlag der DE 94 13 934 U, Klemmverbindungen für Möbelstücke aus geteilten Klemmverbindungsteilen herzustellen, welche durch keilartige Spreizelemente in einer Öffnung, z. B. einem Rohr, verklemmt werden, ist auf eine Reling an Kraftfahrzeugen deshalb nicht übertragbar, weil sie einer dynamischen Dauerbelastung unter hohen Kräften nicht standhält, da sich die keilartigen Spreizelemente lösen.

Der Vorschlag der DE 71 24 838 U beinhaltet ein in ein Rohr einfügbares längsgeschlitztes Klemmstück, welche durch eine mittels einer Bohrung im Rohr anziehbare Schraube gespreizt werden soll. Dieser Vorschlag ist deshalb nicht brauchbar, weil das Befestigungsmittel für eine Reling aus optischen Gründen und zur Vermeidung unsachgemäßer Eingriffe weder sichtbar noch zugänglich sein soll.

Die DE 79 35 511 U schlägt einen Verbinder mit einem Winkelhebelklemmteil vor, das allerdings ebenfalls durch eine von außen betätigbare Schraube befestigt werden muß. Daher scheidet auch dieser Vorschlag aus den vorgenannten Gründen für eine Relingbefestigung aus.

Der Erfindung liegt daher die Aufgabe zugrunde, eine Reling der eingangs genannten Art derart auszugestalten, daß eine schnelle, preiswerte und einfache Befestigung möglich ist, ohne daß ein Befestigungsmittel von außen sichtbar ist.

Die Aufgabe wird erfindungsgemäß dadurch gelöst, daß die Haltemittel als Spreizelement mit einem am Adapter gelagerten Hebelelement ausgebildet sind, das in Zusammenwirkung mit dem Adapter Preßkräfte auf die Innenseite der Wandung des Holms ausübt, wobei das Befestigungsmittel gleichzeitig als Betätigungselement zur Aufspreizung des Spreizelements fungiert und durch den Adapter im Bereich der Öffnung des Holms hindurchgreift.

Bei der Erfindung braucht der Adapter nur eingefügt und durch eine Betätigung des Spreizelements verklemmt werden. Da der Holm der Reling nicht gebohrt werden muß, entfällt nicht nur dieser Arbeitsschritt, es wird auch eine Schwächung durch eine Bohrung vermieden und Befestigungsmittel wie Betätigungselement sind von außen unzugänglich. Der Holm ist als rohrförmiges gebogenes Teil einfach herzustellen. Er benötigt keine speziellen Befestigungselemente wie Gewinde oder Bohrungen für eine Verschraubung oder Verstiftung.

Die Aufspreizung des Spreizelements läßt sich auf verschiedene Weise erzeugen. Wesentlich ist dabei, daß das Spreizelement einen Preßdruck gegen die Innenwandung des rohrförmigen Holms erzeugt und dadurch den Adapter sicher in dem Rohr des Holms verklemmt.

Dabei ist das Spreizelement ein Teilbereich des Adapters mit einem diesen auseinandertreibenden Betätigungselement, so daß der Adapter Preßkräfte auf die Innenseite der Wandung des Holms ausübt. Vorgesehen ist, daß das Spreizelement ein am Adapter gelagertes Hebelelement ist, das in Zusammenwirkung mit dem Adapter Preßkräfte auf die Innenseite der Wandung des Holms ausübt. Das Hebelelement läßt sich auf verschiedene Weise ausbilden, es kann ein einarmiger Hebel sein, vorzugsweise ist jedoch vorgesehen, daß es wippenartig ausgebildet ist. Die Preßkräfte können mittels der Kraftbeaufschlagung durch ein Betätigungselement erzeugt werden. Ein solches Betätigungselement kann eine auf das Hebelement wirkende Schraube sein. Ein solches Betätigungselement kann natürlich auch ein Niet sein, wenn eine entsprechende Kraftbeaufschlagung bei der Befestigung, zum Beispiel bei der Vernietung, vorgesehen ist. Auch ein anderes Betätigungselement ist denkbar.

Weiterhin wird vorgeschlagen, daß das Befestigungsmittel für die Anbringung der Reling an der Karosserie derart ausgebildet und angeordnet ist, daß es bei der Befestigung gleichzeitig als Betätigungselement zur Aufspreizung des Spreizelements fungiert. Da auf diese Weise durch das Befestigungsmittel, wie beispielsweise das Anziehen einer Schraube, sowohl der Adapter in dem Holm befestigt wird, als auch das Holmende an der Karosserie, ist die Montage besonders einfach und schnell durchzuführen. Eine solche Doppelfunktion weist das Betätigungselement auf, das das wippenartige Hebelement betätigt und gleichzeitig den Adapter mit dem Holmende gegen die Karosserie zieht.

Erfindungsgemäß greift das Befestigungsmittel und Betätigungselement durch den Adapter im Bereich der Öffnung des Holms hindurch. Es wird dann beim Anfügen des Holms an die Karosseriefläche durch diese hindurchgeführt und von der Karosserieseite her mit der erforderlichen Kraft beaufschlagt. Dies hat den Vorteil, daß das Befestigungsmittel und Betätigungselement von außen weder sichtbar noch betätigbar ist. Dies führt nicht nur zu einem guten optischen Eindruck, sondern vermeidet auch unsachgemäße Eingriffe, die ein Sicherheitsrisiko mit schwerwiegenden Folgen darstellen können.

Neben dem vorgenannten Vorteil gestattet die erfindungsgemäße Ausgestaltung des Haltemittels als Spreizelement, daß dieses weit in den Holm hineingreift und dadurch einen sicheren Halt gewährleistet. Dabei sind der Adapter und das Hebelelement auch dazu geeignet, weit hineingreifend in ein solches Holmende eingebracht zu werden, welches nach seiner Anfügung an die Karosseriefläche zu dieser einen spitzen Winkel bildet.

Es kann vorgesehen sein, daß das wippenartige Hebelelement zwei Hebelarme aufweist, die sich von einer Lagerung nach außen erstrecken, und daß das Befestigungsmittel auf einen ersten Hebelarm wirkt, um den auf der anderen Seite der Lagerung befindlichen zweiten Hebelarm gegen die Wandung des Holms zu drücken.

Auch ein Befestigungsmittel, das gleichzeitig als Betätigungselement für das Spreizelement ausgebildet ist, kann verschiedene Ausgestaltungen aufweisen. Wesentlich ist bei allen Ausgestaltungen nur, daß bei der Befestigung dieses Befestigungsmittels mit einer Kraft beaufschlagt wird, die sowohl die Aufspreizung des Spreizelements bewirkt, als auch das Holmende mit einer ausreichenden Kraft bündig gegen die Karosseriefläche zieht.

Das Befestigungsmittel, das durch den Adapter im Bereich der Öffnung des Holms hindurchgreift, wird mit dem Aufsetzen des Holmendes auf die Karosserieoberfläche in die Karosserie eingefügt und die Verklemmung des Adapters sowie die Befestigung der Reling kann dadurch erfolgen, daß der Adapter ein hinter der Lagerung des wippenartigen Hebelelements angeordnetes in das Rohr des Holms hineinragendes Klemmteil aufweist, das sich gemeinsam mit dem zweiten Hebelarm des wippenartigen Hebelelements scherenartig öffnend gegen die Wandung des Holms preßt. Auf diese Weise wird durch das Anziehen des Befestigungsmittels sowohl der Adapter in dem Holmrohr verankert, als auch gleichzeitig das Holmende an der Karosserie befestigt. Wie schon erwähnt, können derartige Befestigungsmittel Schrauben sein oder Niete, die vor der Vernietung entsprechend kraftbeaufschlagt werden. Auch andere Befestigungsmittel mit einer derartigen Kraftbeaufschlagung sind denkbar.

Da die Befestigung einer Reling normalerweise an einer doppelwandigen Tragstruktur erfolgt, also an der Karosseriefläche und einem unter dieser angeordnetem Tragelement, ist es zweckmäßig, wenn das Befestigungsmittel entsprechend ausgestaltet ist. Vorzugsweise wird dazu vorgesehen, daß ein Distanzstück zur Anbringung sowohl an der Karosseriefläche als auch an dem Tragelement vorgesehen ist, also somit zur Anbringung an einer doppelwandigen Tragstruktur.

Die Erfindung wird nachfolgend anhand von in der Zeichnung dargestellten Ausführungsbeispielen erläutert. Es zeigen
- **Fig. 1**: ein erstes Ausführungsbeispiel der Erfindung, sowie als Einzelansichten
- **Fig. 2**: den Adapter mit Befestigungsmittel,
- **Fig. 3**: das wippenartige Hebelelement mit Befestigungsmittel und
- **Fig. 4**: den Adapter und das wippenartige Hebelelement als Funktionseinheit.

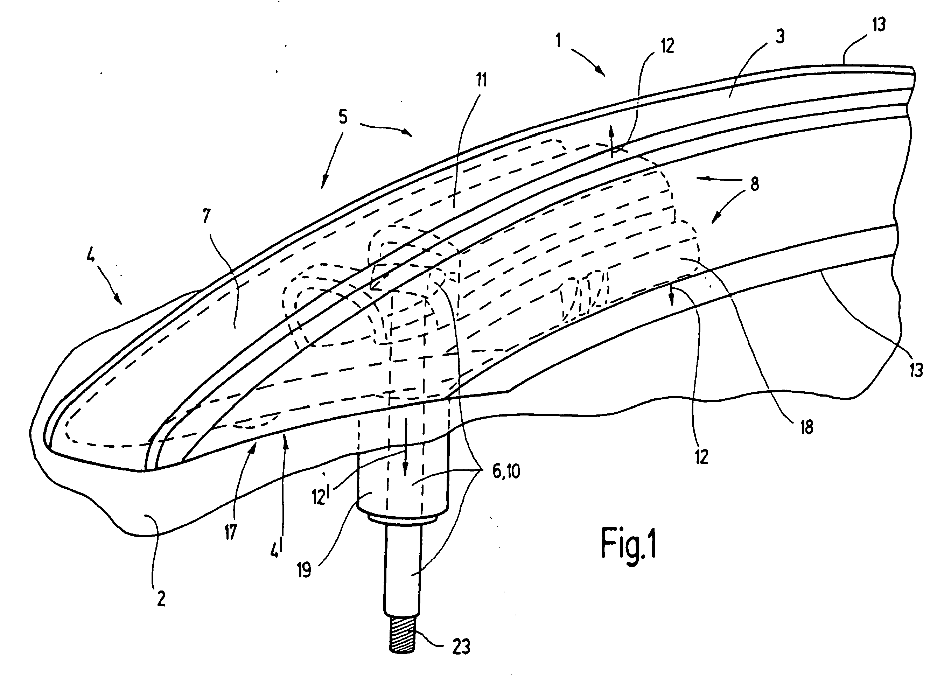

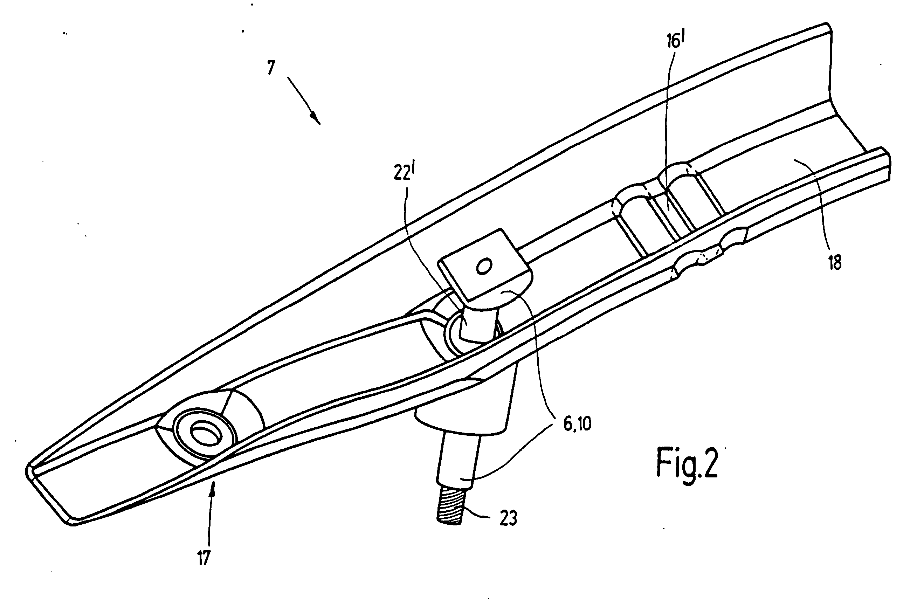

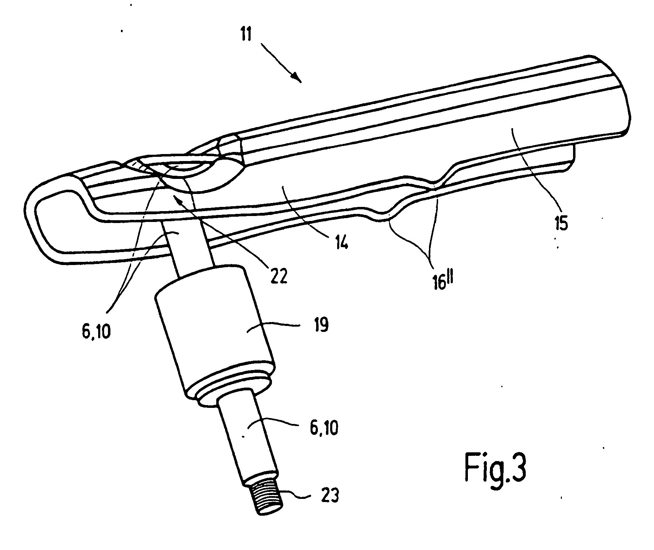

Die **Figuren 1 bis 4** zeigen ein Ausführungsbeispiel der Erfindung. Dabei zeigt **Fig. 1** eine Gesamtansicht eines auf der Karosseriefläche 2 aufgesetzten, mit einer Abbiegung 5 versehenen Endes 4 eines rohrförmigen Holms 3 einer Reling 1. Der in der Öffnung 4' des Holmrohrs am Holmende 4 eingefügte Adapter 7 mit den weitren Funktionselementen sind gestrichelt eingezeichnet. Um diese Funktionselemente besser zu verdeutlichen zeigt die **Fig. 2** einen Adapter 7 mit einem Befestigungsmittel 6 und die **Fig. 3** ein wippenartiges Hebelelement 11, ebenfalls mit dem Befestigungsmittel 6.

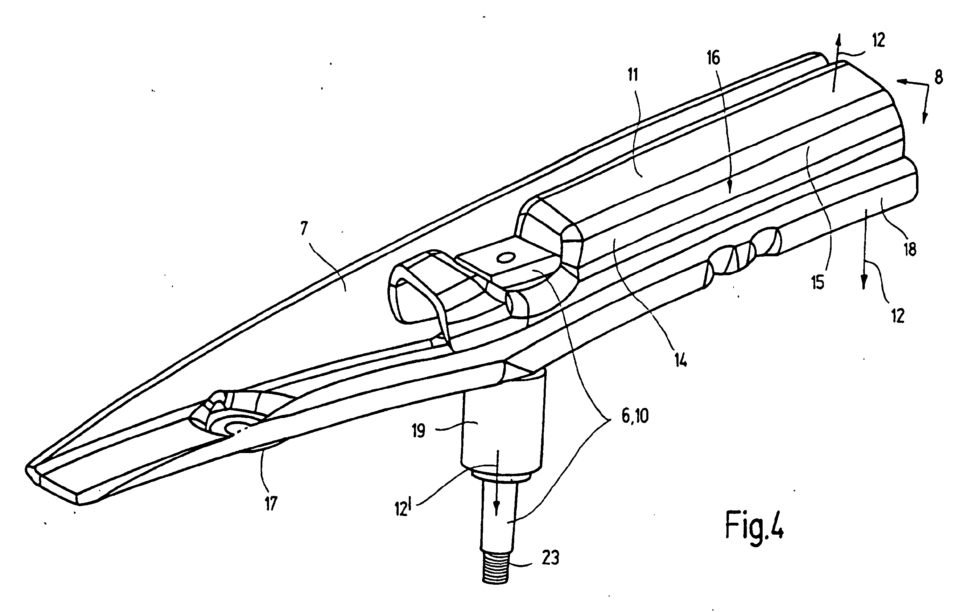

Schließlich zeigt die **Fig. 4** die Zusammenfügung des Adapters 7 und des wippenartigen Hebelelements 11 zu der in Fig. 1 gestrichelt gezeichneten Funktionseinheit.

Der Aufbau dieser Funktionseinheit ist folgender: Der Adapter 7 (**Fig. 2**) und das wippenartige Hebelelement 11 (**Fig. 3**) werden derart ineinandergefügt, daß eine Lagerung 16 des wippenartigen Hebelelements 11 dadurch entsteht, daß die Lagerhälfte 16" am wippenartigen Hebelelement 11 in die Lagerhälfte 16' des Adapters 7 eingreift. Dadurch entsteht hinter dieser Lagerung 16 ein weit in den rohrförmigen Holm 3 hineinragendes Spreizelement 8, das insbesondere auch für Holme 3 geeignet ist, die zur Karosseriefläche 2 einen spitzen Winkel bilden. Auf diese Weise können auch solche Holme 3 sicher und sehr stabil befestigt werden. Das Betätigungselement 10, das gleichzeitig als Befestigungsmittel 6 dient, wird durch entsprechende Bohrungen 22 und 22' des wippenartigen Hebelelements 11 und des Adapters 7 hindurchgeführt und so die in **Fig. 4** dargestellte Funktionseinheit erzielt.

Diese Funktionseinheit wird in die Öffnung 4' des Holmrohrs 3 am Holmende 4 eingeschoben bis der Adapter 7 mit der Öffnung 4' bündig abschließt oder leicht nach innen versetzt ist. Danach wird die Reling 1 auf die Karosseriefläche 2 aufgesetzt und das Befestigungsmittel 6 vorzugsweise in eine doppelwandige Tragstruktur (nicht gezeichnet) eingefügt, die in der Regel aus der Karosseriefläche 2 und einem darunter liegenden Tragelement besteht. Dazu kann ein Distanzstück 19 vorgesehen sein. Das Befestigungsmittel 6 kann auf jede Weise mit einem Mittel, das eine Kraftbeaufschlagung 12' erzeugt, befestigt werden. Dazu kann beispielsweise eine Schraubverbindung 23 dienen. Wie oben bereits erwähnt, kann selbstverständlich auch eine andere Befestigungsmöglichkeit vorgesehen sein.

Das Befestigungsmittel 6 dient gleichzeitig als Betätigungselement 10 zur Betätigung eines Spreizelements 8, welches von dem Adapter 7 und dem wippenartigen Hebelelement 11 dadurch gebildet wird, daß das wippenartige Hebelelement 11 beidseitig der Lagerung 16 Hebelarme 14 und 15 aufweist. Wird das Befestigungsmittel 6 mit der Kraft 12' beaufschlagt, so zieht das Befestigungsmittel 6 - als Betätigungselement 10 zur Betätigung des Spreizelements 8 dienend ― den ersten Hebelarm 14 des wippenartigen Hebelelements 11 gegen den Adapter 7, wodurch jenseits der Lagerung 16 der zweite Hebelarm 15 und das dort befindliche Klemmteil 18 des Adapters 7 scherenartig auseinanderbewegt werden. Dadurch wird eine Aufspreizung des Spreizelements 8 bewirkt, so daß Preßkräfte 12 gegen die Wandungen 13 des Holms 3 erzeugt werden, welche den Adapter 7 in dem rohrförmigen Holm 3 verklemmen. Gleichzeitig mit dieser Verklemmung wird durch die Kraftbeaufschlagung 12' die Auflagefläche 17 des Adapters 7 sowie das Holmende 4 mit seiner Öffnung 4' gegen die Karosseriefläche 2 gepreßt. Auf diese Weise wird das Holmende 4 der Reling 1 sicher befestigt.

Selbstverständlich ist das Ausführungsbeispiel lediglich eine beispielhafte Andeutung vieler Realisierungsmöglichkeiten. Wesentlich ist dabei, daß das Spreizelement 8 derart ausgebildet ist, daß es weit genug in den Holm 4 hineingreift, um einen sicheren Halt zu bewirken.

### Bezugszeichenliste

- 1: Reling
- 2: Karosseriefläche
- 3: rohrförmiger Holm
- 4: Holmende
- 4': Öffnung des Holmrohrs am Holmende
- 5: Abbiegungen
- 6: Befestigungsmittel
- 7: Adapter
- 8: Spreizelement
- 9: Teilbereich des Adapters
- 10: Betätigungselemente des Spreizelements durch Auseinandertreiben oder Kraftbeaufschlagung (z. B. Schrauben)
- 11: wippenartiges Hebelelement
- 12: Pfeile: Preßkräfte
- 12': Kraftbeaufschlagung eines Befestigungselements
- 13: Wandung des Holms
- 14: erster Hebelarm des wippenartigen Hebelelements (Betätigungsseite)
- 15: zweier Hebelarm des wippenartigen Hebelelements (Spreizseite)
- 16: Lagerung des wippenartigen Hebelelements
- 16': Lagerhälfte im Adapter
- 16": Lagerhälfte am wippenartigen Hebelelement
- 17: Auflagefläche
- 18: Klemmteil
- 19: Distanzstück für doppelwandige Tragestruktur
- 22: Bohrung des wippenartigen Hebelelements
- 22': Bohrung des Adapters
- 23: Schraubverbindung

## Patentansprüche

1. Reling (1) für Fahrzeuge mit mindestens einem in einem Abstand und im wesentlichen parallel zu einer Karosseriefläche (2) sich erstreckenden rohrförmigen Holm (3), der an den Holmenden (4) mit jeweils einer Abbiegung (5) ausgebildet ist und mindestens an diesen Holmenden (4) Befestigungsmittel (6) zur Befestigung an der Karosserie aufweist, wobei die Abbiegungen (5) des Holms (3) derart ausgebildet sind, daß sich die Holmenden (4) mit ihren Öffnungen (4') an die Karosserieoberfläche (2) anlegen, und Adapter (7) derart ausgebildet sind, daß sie in die Öffnungen (4') des Holmrohres (3) an den Holmenden (4) vollständig eingefügt sind, wobei Haltemittel die Adapter (7) in dem Holm (3) festlegen und die Befestigungsmittel (6) den Adapter (7) mit der Karosserie verbinden,
**dadurch gekennzeichnet,**
**daß** die Haltemittel als Spreizelement (8) mit einem am Adapter (7) gelagerten Hebelelement (11) ausgebildet sind, das in Zusammenwirkung mit dem Adapter (7) Preßkräfte (12) auf die Innenseite der Wandung (13) des Holms (3) ausübt, wobei das Befestigungsmittel (6) gleichzeitig als Betätigungselement (10) zur Aufspreizung des Spreizelements (8) fungiert und durch den Adapter (7) im Bereich der Öffnung (4) des Holms (3) hindurchgreift.

2. Reling nach Anspruch 1,
**dadurch gekennzeichnet,**
**daß** das Hebelelement (11) wippenartig ausgebildet ist und dabei zwei Hebelarme (14, 15) aufweist, die sich von einer Lagerung (16) nach außen erstrecken, und daß das Befestigungs- und Betätigungsmittel (6,10) auf den ersten Hebelarm (14) wirkt, um den auf der anderen Seite der Lagerung (16) befindlichen zweiten Hebelarm (15) gegen die Wandung (13) des Holms (3) zu drücken.

3. Reling nach Anspruch 1 oder 2,
**dadurch gekennzeichnet,**
**daß** der Adapter (7) ein hinter der Lagerung (16) in das Rohr des Holms (3) hineinragendes Klemmteil (18) aufweist, das sich gemeinsam mit dem zweiten Hebelarm (15) des Hebelelements (11) scherenartig öffnend gegen die Wandung (13) des Holms (3) preßt.

4. Reling nach Anspruch 1, 2 oder 3,
**dadurch gekennzeichnet,**
**daß** das Befestigungs- und Betätigungsmittel (6, 10) eine Schraubverbindung (23) ist.

5. Reling nach einem der Ansprüche 1 bis 4,
**dadurch gekennzeichnet,**
**daß** ein Distanzstück (12) zur Anbringung an einer doppelwandigen Tragstruktur vorgesehen ist.

## Claims

1. A roof rail (1) for vehicles, comprising at least one tubular profile (3) extending at a distance from, and substantially parallel to, a vehicle body surface (2), which profile (3) has a bend (5) at each of its ends (4) and comprises, at least at these profile ends (4), fastening means (6) for attachment thereof to the vehicle body, the bends (5) of the profile (3) being designed in such a manner that the profile ends (4) bear with their openings (4') against the surface of the vehicle body (2), and adapters (7) are designed in such a manner that they are completely enclosed in openings (4') of the profile tube (3) at the profile ends (4), and retaining means fix said adapters (7) within the profile (3), and said fastening means (6) connect the adapter (7) to the vehicle body,
**characterized in that**
the retaining means are in the form of an expansion element (8) equipped with a lifting element (11) which is mounted on the adapter (7), and which, in cooperation with the adapter (7), exerts pressing forces (12) on the inside surface of the wall (13) of the profile (3), and the fastening means (6) at the same time function as an actuator (10) for spreading the expansion element (8) and engage through the adapter (7) in the region of the opening (4) in the profile (3).

2. A roof rail according to claim 1, **characterized in that** the lifting element (11) is rocker-like in design and has two lever arms (14, 15) extending outwardly from bearing means (16), and that the fixing and actuating means (6, 10) act on the first lever arm (14), in order to press the second lever arm (15), which is located on the other side of the bearing means (16), against the wall (13) of the profile (3).

3. A roof rail according to claim 1 or claim 2, **characterized in that** the adapter (7) has a clamping element (18) projecting into the tube of the profile (3) behind the bearing means (16), which clamping element (18), together with the second lever arm (15) of the lifting element (11), presses against the wall (13) of the profile (3) in an opening scissor-like fashion,

4. A roof rail according to claim 1, 2, or 3, **characterized in that** the fixing and actuating means (6, 10) consist of a screw joint (23).

5. A roof rail according to any one of claims 1 to 4, **characterized in that** a spacer (12) is provided for attachment to a double-walled supporting structure (20).

## Revendications

1. Garde-corps (1) pour véhicules avec au moins une traverse tubulaire (3) qui s'étend à distance sensiblement parallèlement à une surface de carrosserie (2), qui est munie aux extrémités de traverses (4) respectivement d'un coude (5) et qui présente au moins aux extrémités de traverse (4) des moyens de fixation (6) pour la fixation sur la carrosserie, les coudes (5) de la traverse (3) étant réalisées de sorte que les extrémités de traverse (4) s'appliquent par leurs ouvertures (4') contre la surface de carrosserie (2) et des adaptateurs (7) étant agencés de sorte qu'ils sont entièrement insérés dans les ouvertures (4') de la traverse tubulaire (3) aux extrémités de traverse (4), des moyens de retenue fixant les adaptateurs (7) dans la traverse (3) et les moyens de fixation (6) reliant l'adaptateur (7) à la carrosserie, **caractérisé en ce que**
les moyens de retenue sont réalisés comme des éléments d'écartement (8) avec un élément de levage (11) logé sur l'adaptateur (7), élément de levage qui exerce en coopération avec l'adaptateur (7) des forces de pressage (12) sur la face interne de la paroi (13) de la traverse (3), le moyen de fixation (6) faisant office en même temps d'élément de fixation (10) pour l'écartement de l'élément d'écartement (8) et traverse l'adaptateur (7) dans la zone de l'ouverture (4) de la traverse (3).

2. Garde-corps selon la revendication 1,
**caractérisé en ce que**
l'élément de levage (11) est réalisé comme une bascule et présente deux arbres de levage (14, 15) qui s'étendent vers l'extérieur depuis un logement (16) et **en ce que** les moyens de fixation et d'actionnement (6, 10) agissent sur le premier bras de levage (14) pour presser le second bras de levage (15) se trouvant de l'autre côté du logement (16) contre la paroi (13) de la traverse (3).

3. Garde-corps selon la revendication 1 ou 2,
**caractérisé en ce que**
l'adaptateur (7) présente une pièce de serrage (18) s'engageant derrière le logement (16) dans le tube de la traverse (3), pièce de serrage qui se presse en s'ouvrant à la manière d'une cisaille contre la paroi (13) de la traverse (3) ensemble avec le second bras de levage (15) de l'élément de levage (11).

4. Garde-corps selon la revendication 1, 2 ou 3,
**caractérisé en ce que**
le moyen de fixation et d'actionnement (6, 10) est une connexion à vis (23).

5. Garde-corps selon l'une des revendications 1 à 4,
**caractérisé en ce qu'**
une pièce d'écartement (12) est prévue pour la mise en place sur une structure support à double paroi.
